# EUROPÄISCHE PATENTSCHRIFT

(11) **EP 1 271 039 B1**
(45) Veröffentlichungstag und Bekanntmachung des Hinweises auf die Patenterteilung: **05.12.2007**
(21) Anmeldenummer: 02014565.2
(22) Anmeldetag: 01.07.2002
(51) Int. Cl.: F16L 37/23, F16L 37/12

(54) **Anschlussnippel**
Connecting nipple
Raccord de connexion

(30) Priorität: 30.06.2001 DE 20110598 U
(43) Veröffentlichungstag der Anmeldung: 02.01.2003
(73) Patentinhaber: Weh, Erwin, D-89257 Illertissen (DE); Weh, Wolfgang, D-89257 Illertissen (DE)
(72) Erfinder: Weh, Erwin, D-89257 Illertissen (DE); Weh, Wolfgang, D-89257 Illertissen (DE)
(74) Vertreter: Fiener, Josef

(56) Entgegenhaltungen:
- WO-A-00/52378
- WO-A-99/67564
- WO-A-03/041984
- DE-A- 4 116 188
- DE-B- 1 088 770
- US-A- 4 872 710
- US-A- 6 035 894

## Beschreibung

Die Erfindung betrifft einen Anschlußnippel, insbesondere für die Betankung von Erdgasfahrzeugen, zum druckdichten Anschluß an eine Steckkupplung mit einem formschlüssigen Anschlußprofil, insbesondere in Form einer Ringnut.

Ein derartiger Anschlußnippel ist aus der WO 00/52378 der Anmelder bekannt. Hierbei wird eine Schnellanschluß- oder Steckkupplung beschrieben, wobei ein Dichtkolben am vorderen Stirnende der Kupplung beim Kontakt mit dem Anschlußnippel nach innen verschoben wird, wobei dann Spannzangen mit einem entsprechenden Eingriffsprofil in das korrespondierend ausgebildete Anschlußprofil des Anschlußnippels eingreifen. Hierdurch wird ein formschlüssiger und druckdichter Anschluß erreicht, wie dies zur Druck-Betankung von Erdgas-Fahrzeugen erforderlich ist. Der Anschlußnippel ist hierbei nach Normen für die Erdgasbetankung (NGV) standardisiert, damit eine Vielzahl von Erdgasfahrzeugen an entsprechenden Erdgas-Tankstellen mit der Steckkupplung betankt werden können. Darüber hinaus gibt es jedoch länderspezifische Abwandlungen der Anschlußnippel, so daß bei größeren Reisen, beispielsweise von Deutschland nach Italien, u.U. Probleme mit der Betankungsmöglichkeit auftreten können. Häufig muß daher der Fahrzeugbesitzer entsprechende Adapter mit sich führen oder an der Tankstelle an der Steckkupplung und/oder am Anschlußnippel anbringen. Diese Vorgehensweise ist jedoch sehr aufwendig.

Demzufolge liegt der Erfindung die Aufgabe zugrunde, einen Anschlußnippel zu schaffen, bei dem die Betankung mit unterschiedlichen Steckkupplungen durchführbar ist.

Diese Aufgabe wird gelöst durch einen Anschlußnippel gemäß den Merkmalen des Anspruches 1. Bevorzugte Ausführungsformen sind Gegenstand der Unteransprüche.

Durch die Anordnung wenigstens eines zweiten Anschlußprofiles in axialem Abstand vom ersten Anschlußprofil am Anschlußnippel ist es möglich, unterschiedliche Steckkupplungen an dem Anschlußnippel, insbesondere des Erdgasfahrzeuges, anzuschließen. Hierdurch ist eine vielfältige Betankungsmöglichkeit ohne Zwischenstück oder Adapter möglich. Zudem werden bei der Ausrüstung der Fahrzeuge für den Erdgasbetrieb erhebliche Einsparungsmöglichkeiten geschaffen, da durch diesen Anschlußnippel aufwendige Umrüstungen je nach Lieferland vermieden werden können.

In bevorzugter Ausführungsform sind die Anschlußprofile als Ringnuten mit konischen Ringflanken ausgebildet, so daß darin entsprechende Spannzangen oder in einer Hülse geführte Arretierkugeln unterschiedlicher Durchmesser eingreifen können. Die Anschlußprofile sind hierbei bevorzugt in eine Anschlußhülse eingedreht, die auch dazu dient, eine Ventilsitzhülse eines Rückschlagventils im Anschlußnippel zu verankern. Zudem kann hierdurch auch ein Filtereinsatz im Anschlußnippel sicher gehalten werden, der insbesondere einstückig an der Ventilsitzhülse angeformt ist. Durch die kegelige Außenform des Filtereinsatzes ergibt sich ein besonders kompakter Aufbau des Anschlußnippels.

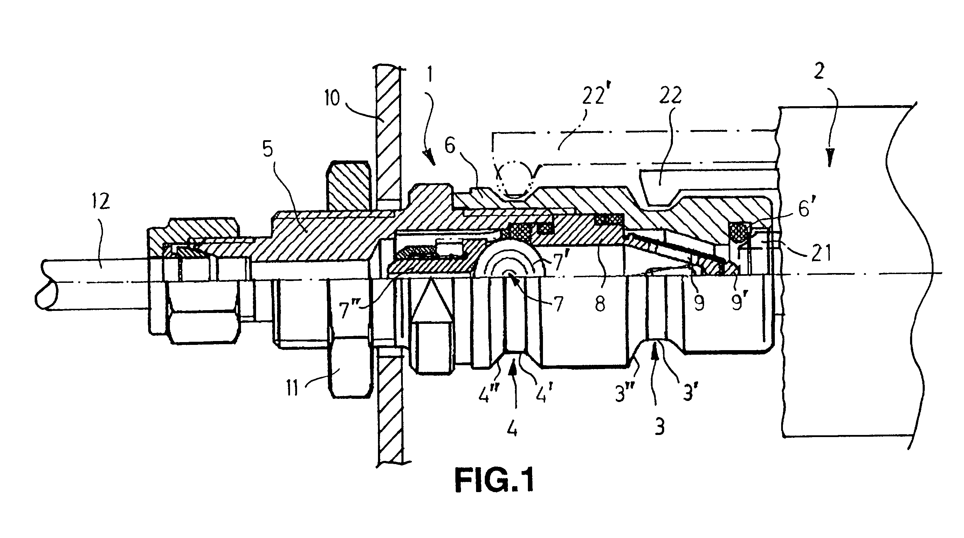

Nachfolgend wird ein bevorzugtes Ausführungsbeispiel des Anschlußnippels anhand der Zeichnungen beschrieben und erläutert. Hierbei zeigt die (einzige) Fig. 1 im halbschnitt einen Anschlußnippel 1, an dem zum druckdichten Anschluß eine Steckkupplung 2 formschlüssig anschließbar ist. Das erste Anschlußprofil 3 ist hierbei in Form einer Ringnut 3' mit zwei konischen Ringflanken 3'' ausgebildet. Neuerungsgemäß ist an dem Anschlußnippel 1 ein zweites Anschlußprofil 4 vorgesehen, das axial vom ersten Anschlußprofil 3 beabstandet ist. Das zweite Anschlußprofil 4 ist ebenfalls bevorzugt als Ringnut 4' mit zwei konischen Ringflanken 4'' ausgebildet. Die beiden Anschlußprofile 3 und 4 sind hierbei in eine Anschlußhülse 6 eingearbeitet, die mit einer Nippelhülse 5 verschraubbar ist.

Durch diese Verschraubung wird auch eine Ventilsitzhülse 8 eines Rückschlagventiles 7 im Inneren des Anschlußnippels 1 gehalten.

Das Rückschlagventil 7 besteht neben der Ventilsitzhülse 8 aus einer Sperrkugel 7', die in einem Teleskopelement 7'' gelagert ist. Bei Druckbeaufschlagung, insbesondere bei der Betankung, kann somit die Sperrkugel 7' durch die Verschiebebewegung des Teleskopelementes 7'' (hier nach links) ausweichen und somit den Fluiddurchlaß zu einem Anschlußschlauch 12 freigeben, der beispielsweise zu einem Erdgastank führt.

In bevorzugter Ausführungsform ist an der Ventilsitzhülse 8 ein Filtereinsatz 9 angeformt, insbesondere in einstückiger Form. Der Filtereinsatz 9 weist hierbei eine kegelige Außenform auf, so daß sich die Spitze 9' des Filtereinsatzes 9 bis nahe zu einem Dichtring 6' erstreckt, der in der Anschlußhülse 6 in eine Ringnut eingesetzt ist. An diesen Dichtring 6' ist in Anschlußstellung ein (nur in Strichlinien angedeuteter) Dichtkolben 21 der Steckkupplung 2 ansetzbar, so daß sich ein druckdichter Anschluß ergibt. In dieser Anschlußstellung greifen Spannzangen 22 (oder auch bei Hydraulikkupplungen übliche Kugeln) in das erste Anschlußprofil 3 ein. Der nähere Aufbau der Steckkupplung und der Spannzangenanordnung ist beispielsweise in der eingangs genannten WO 00/52378 und weiterer Patente(-anmeldungen) der Anmelder beschrieben.

Neuerungsgemäß kann alternativ zu dem Eingriff an dem ersten Anschlußprofil 3 eine entsprechend durchmessergrößere Spannzangenanordnung 22' (oder eine Arretierkugel-Hülse; doppeltstrichpunktiert angedeutet) an dem zweiten Anschlußprofil 4 eingreifen, wie dies in Strichpunktlinien dargestellt ist. Hierdurch können unterschiedliche Steckkupplungen an ein und denselben Anschlußnippel mit den unterschiedlichen Anschlußprofilen 3 und 4 angeschlossen werden. Es sei darauf hingewiesen, daß im Bedarfsfalle sogar noch ein drittes oder viertes Anschlußprofil an dem Anschlußnippel 1 vorgesehen sein kann. Der Anschlußnippel 1 ist hierbei durch eine Überwurfmutter 11, die an der Nippelhülse 5 verschraubt ist, an der Fahrzeugkarosserie 10 oder einem ähnlichen Halterungsteil befestigt.

Durch die mehrteilige Bauweise des Anschlußnippels 1, insbesondere mit den Hauptteilen der Nippelhülse 5 und der Anschlußhülse 6 können hierbei unterschiedliche Anschlußarten geschaffen werden. Im Bedarfsfalle kann hierbei auch die Anschlußhülse 6 mit den beiden (oder mehr) Anschlußprofilen 3 und 4 leicht ausgetauscht werden. Ebenso wird hierdurch ein leichter Zugang zu dem Filtereinsatz 9 geschaffen, falls dieser ausgetauscht oder gereinigt werden müßte. Insgesamt wird somit ein besonders einfach aufgebauter, variabel einsetzbarer Anschlußnippel, insbesondere für die Betankung von Erdgasfahrzeugen geschaffen.

## Patentansprüche

1. Anschlußnippel, insbesondere für die Betankung von Erdgasfahrzeugen, zum druckdichten Anschluß an eine Steckkupplung, mit einem formschlüssigen Anschlußprofil, insbesondere in Form einer Ringnut, wobei am Anschlußnippel (1) axial vom ersten Anschlußprofil (3) beabstandet wenigstens ein zweites Anschlußprofil (4) angeordnet ist, **dadurch gekennzeichnet, daß** beide Anschlußprofile (3, 4) als Ringnuten (3', 4') unterschiedlichen Durchmessers ausgebildet sind und unterschiedliche Steckkupplungen mit Spannzangen (22, 22') oder Arretierkugeln mit unterschiedlichen Abmessungen, insbesondere Durchmessern an die Anschlußprofile (3, 4) des Anschlußnippels (1) wechselweise angeschlossen sind.

2. Anschlußnippel nach Anspruch 1, **dadurch gekennzeichnet, daß** die Ringnuten (3', 4') jeweils zwei konische Ringflanken (3", 4") aufweisen.

3. Anschlußnippel nach Anspruch 1 oder 2, **dadurch gekennzeichnet, daß** im Anschlußnippel (1) ein Rückschlagventil (7) eingebaut ist, dessen Ventilsitzhülse (8) durch eine Anschlußhülse (6) und eine Nippelhülse (5) verspannt, insbesondere verschraubt ist.

4. Anschlußnippel nach Anspruch 3, **dadurch gekennzeichnet, daß** an der Ventilsitzhülse (8) ein Filtereinsatz (9) angeformt ist, insbesondere in einstückiger Form.

5. Anschlußnippel nach Anspruch 4, **dadurch gekennzeichnet, daß** der Filtereinsatz (9) eine kegelige Außenform aufweist, die im wesentlichen unter Bildung eines Fluid-Durchlaßspaltes der Innenform der Anschlußhülse (6) entspricht.

6. Anschlußnippel nach Anspruch 4 oder 5, **dadurch gekennzeichnet, daß** die Spitze (9') des Filtereinsatzes (9) - in Radialrichtung gesehen - einem Dichtring (6') gegenüberliegt, der in eine Nut der Anschlußhülse (6) eingesetzt ist.

7. Anschlußnippel nach Anspruch 6, **dadurch gekennzeichnet, daß** an den Dichtring (6') in Anschlußstellung ein Dichtkolben (21) der Steckkupplung (2) anliegt.

8. Anschlußnippel nach Anspruch 7, **dadurch gekennzeichnet, daß** der Dichtkolben (21) an der zum Dichtring (6') weisenden Außenfläche eine Ringschräge aufweist.

## Claims

1. Connecting nipple, in particular for the refueling of natural gas vehicles, for pressure-tight connection to a plug-in coupling, comprising a positive connection profile, in particular in the form of an annular groove, wherein at the connecting nipple (1), axially spaced from the first connection profile (3), there is at least arranged a second connection profile (4),
**characterized in that** both connection profiles (3, 4) are formed as annular grooves (3', 4') of different diameters, and different plug-in couplings with collets (22, 22') or lock balls having different dimensions, in particular diameters, are alternately connected to the connection profiles (3, 4) of the connecting nipple (1).

2. Connecting nipple according to claim 1, **characterized in that** the annular grooves (3', 4') each exhibit two conical ring flanks (3", 4").

3. Connecting nipple according to claim 1 or claim 2, **characterized in that** the connecting nipple (1) incorporates a check valve (7), the valve seat casing (8) of which is braced, especially screwed by a ferrule terminal (6) and a nipple casing (5).

4. Connecting nipple according to claim 3, **characterized in that** the valve seat casing (8) comprises an integral filter cartridge (9), in particular formed in one piece.

5. Connecting nipple according to claim 4, **characterized in that** the filter cartridge (9) exhibits a tapered exterior shape essentially corresponding to the interior shape of the ferrule terminal (6) under formation of a fluid passage gap.

6. Connecting nipple according to claim 4 or claim 5, **characterized in that** the tip (9') of the filter cartridge (9) - when seen in radial direction - faces a sealing ring (6') which is inserted into a groove of the ferrule terminal (6).

7. Connecting nipple according to claim 6, **characterized in that** a sealing piston (21) of the plug-in coupling (2) rests against the sealing ring (6') in the connection position.

8. Connecting nipple according to claim 7, **characterized in that** the sealing piston (21) exhibits an annular chamfer at the exterior surface facing the sealing ring (6').

## Revendications

1. Raccord de connexion, en particulier pour le ravitaillement de véhicules à gaz naturel, destiné à la connexion étanche à la pression à un accouplement enfichable, avec un profil de connexion à complémentarité de formes, en particulier sous la forme d'une rainure annulaire, au moins un deuxième profil de connexion (4) étant disposé sur le raccord de connexion (1) à distance axiale du premier profil de connexion (3), **caractérisé en ce que** les deux profils de connexion (3, 4) sont réalisés sous forme de rainures annulaires (3', 4') de diamètre différent et que différents accouplements enfichables avec des pinces de serrage (22, 22') ou des billes d'arrêt de dimensions différentes, en particulier de diamètres différents, sont raccordés alternativement aux profils de connexion (3, 4) du raccord de connexion (1).

2. Raccord de connexion selon la revendication 1, **caractérisé en ce que** les rainures annulaires (3', 4') présentent chacun deux flancs annulaires coniques (3 ", 4").

3. Raccord de connexion selon la revendication 1 ou 2, **caractérisé en ce qu'**un clapet anti-retour est intégré dans le raccord de connexion (1) dont le manchon de siège de clapet (8) est serré, en particulier vissé par un manchon de connexion (6) et un manchon de raccord (5).

4. Raccord de connexion selon la revendication 3, **caractérisé en ce qu'**un élément filtrant (9) est formé, en particulier d'une seule pièce, sur le manchon de siège de clapet (8).

5. Raccord de connexion selon la revendication 4, **caractérisé en ce que** l'élément filtrant (9) présente une forme extérieure conique qui correspond sensiblement, en formant une fente de passage de fluide, à la forme intérieure du manchon de connexion (6).

6. Raccord de connexion selon la revendication 4 ou 5, **caractérisé en ce que** la pointe (9') de l'élément filtrant (9) se trouve en face - vu en direction radiale - d'une bague d'étanchéité (6') qui est montée dans une gorge du manchon de connexion (6).

7. Raccord de connexion selon la revendication 6, **caractérisé en ce qu'**un piston d'étanchéité (21) de l'accouplement enfichable (2) est en appui contre la bague d'étanchéité (6') dans la position connectée.

8. Raccord de connexion selon la revendication 7, **caractérisé en ce que** le piston d'étanchéité (21) présente un biseau annulaire sur la surface extérieure dirigée vers la bague d'étanchéité (6').
